(19) **Europäisches Patentamt / European Patent Office / Office européen des brevets**

(11) **EP 1 470 941 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(51) Int Cl.:
***B60G 17/015*** (2006.01)

(21) Anmeldenummer: **04004787.0**

(22) Anmeldetag: **02.03.2004**

(54) **Verfahren zur Regelung einer Dämpfung**

Method for controlling a damping force

Méthode et dispositif pour régler la force d'amortissement

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.04.2003 DE 10318110**

(43) Veröffentlichungstag der Anmeldung:
**27.10.2004 Patentblatt 2004/44**

(73) Patentinhaber: **Continental Aktiengesellschaft 30165 Hannover (DE)**

(72) Erfinder: **Stiller, Alexander, Dr. 30823 Garbsen (DE)**

(56) Entgegenhaltungen:
**EP-A- 0 470 991     EP-A- 0 704 327
DE-A- 10 017 506     DE-C- 4 244 871
US-A- 6 055 471**

Printed by Jouve, 75001 PARIS (FR)

**Beschreibung**

Die Erfindung betrifft ein Verfahren zur Regelung einer Dämpfung für einen Aufbau eines Fahrzeugs sowie ein digitales Speichermedium mit Programmmitteln zur Regelung einer Dämpfung und ein Regelungssystem. Ein solches Verfahren ist aus der gattungsgemäßen DE 4 244 871 A bekannt.

Aus dem Stand der Technik sind verschiedene Regelungsverfahren für die Dämpfer eines Fahrzeugs bekannt. Bei dem sogenannten Ground Hook Verfahren erfolgt dabei die Regelung so, dass der Kontakt zwischen Reifen und Fahrbahn optimiert wird. Dagegen geht es bei dem sogenannten Sky Hook Verfahren um die Optimierung des Komforts.

Im Allgemeinen wird bei Fahrzeugen mit verstellbaren Dämpfern meist von einer Verteilung der Aufbaulast auf die Fahrzeugräder ausgegangen, die fest ist. Bei besonderen Fahrmanövern, wie Kurvenfahrt oder Berg-Talfahrt, ist diese Voraussetzung aber nicht gegeben. Dies führt dazu, dass die entlasteten bzw. zusätzlich belasteten Räder nicht mehr optimal gedämpft werden.

Der Erfindung liegt demgegenüber die Aufgabe zu Grunde, ein verbessertes Verfahren zur Verstellung eines Dämpfungskoeffizienten eines Federbeins eines Fahrzeugs zu schaffen, sowie ein entsprechendes digitales Speichermedium zur Speicherung eines Regelungsprogramms und ein Regelungssystem.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Das erfindungsgemäße Regelungsverfahren ermöglicht es, dass die Dämpfung und der damit verbundene Fahrkomfort bei verschiedenen Fahrzuständen im wesentlichen konstant bleiben, insbesondere bei während der Fahrt auftretenden Quer- und / oder Längsbeschleunigungen, nach einer Zuladung oder bei einem Gefälle oder einer Steigung.

Erfindungsgemäß wird dies so erreicht, dass die Veränderung der Radlast erfasst wird. Vorzugsweise geschieht dies für jedes der Räder. Basierend auf Veränderungen der Radlasten werden dann jeweils Veränderungen der Dämpfungskoeffizienten berechnet und zwar so, dass die resultierende Dämpfung an jedem der Räder im wesentlichen unverändert bleibt.

Auf diese Art und Weise lässt sich der Komfortbereich während einer Beschleunigung des Fahrzeugs ausdehnen. Nach einer bevorzugten Ausführungsform der Erfindung wird die Veränderung der Radlast mit einem Schwellwert verglichen. Wenn die Veränderung der Radlast den Schwellwert überschreitet, so wird automatisch auf ein anderes Regelungsverfahren zur Verbesserung des Kontakts von Reifen und Fahrbahn umgestellt. Auf diese Art und Weise wird die Fahrzeugsicherheit bei kritischen Fahrsituationen verbessert. Nachdem der Schwellwert wieder unterschritten worden ist, wird wieder auf die Regelung zur Konstanthaltung der Dämpfung umgestellt.

Nach einer weiteren bevorzugten Ausführungsform der Erfindung ist die Veränderung des Dämpfungskoeffizienten gegenüber dem Ausgangszustand durch einen Maximalwert begrenzt, wobei der Maximalwert von der Geschwindigkeit abhängig ist. Insbesondere bei höheren Geschwindigkeiten ist dabei ein höherer Maximalwert zulässig als bei geringeren Geschwindigkeiten.

Nach einer bevorzugten Ausführungsform der Erfindung werden für die Berechnung der Veränderung der Radlast Fahrparameter verwendet, die ohnehin bei einem Fahrzeug mit einer fahrdynamischen Regelung, wie beispielsweise ESP, auf einem Datenbus des Fahrzeugs, wie beispielsweise einem CAN-Bus, zur Verfügung stehen.

Alternativ kann die Radlast auch aus der Radaufstandskraft ermittelt werden. Die Messung der Radaufstandkraft kann dabei über die Größen Luft, Federdruck und aus dem Abstand zwischen dem Aufbau und der Fahrzeugachse ermittelt werden. Ein entsprechendes Verfahren zur Ermittlung der Radaufstandskraft ist an sich aus DE 100 17 506 C2 bekannt.

Eine weitere Möglichkeit zur Ermittlung der Radlasten ist die Verwendung eines "intelligenten Reifens", der mit spezieller Sensorik und Auswertevorrichtungen versehen ist. Mit Hilfe eines solchen Reifens können die Radaufstandskräfte direkt gemessen werden; aus den Radaufstandskräften werden dann die Radlasten ermittelt.

Eine weitere Möglichkeit zur Erfassung der Veränderung der Radlasten ist die Messung der Änderung der Höhenabstände zwischen den Fahrzeugachsen und dem Fahrzeugaufbau. Über die Federsteifigkeit lässt sich so die Veränderung der Radlast ermitteln.

Im weiteren werden bevorzugte Ausführungsformen der Erfindung mit Bezugnahme auf die Zeichnung näher erläutert. Es zeigen:

Figur 1    ein Flussdiagramm einer bevorzugten Ausführungsform eines erfindungsgemäßen Verfahrens,

Figur 2    ein Blockdiagramm einer bevorzugten Ausführungsform eines Regelungssystems in einem Kraftfahrzeug.

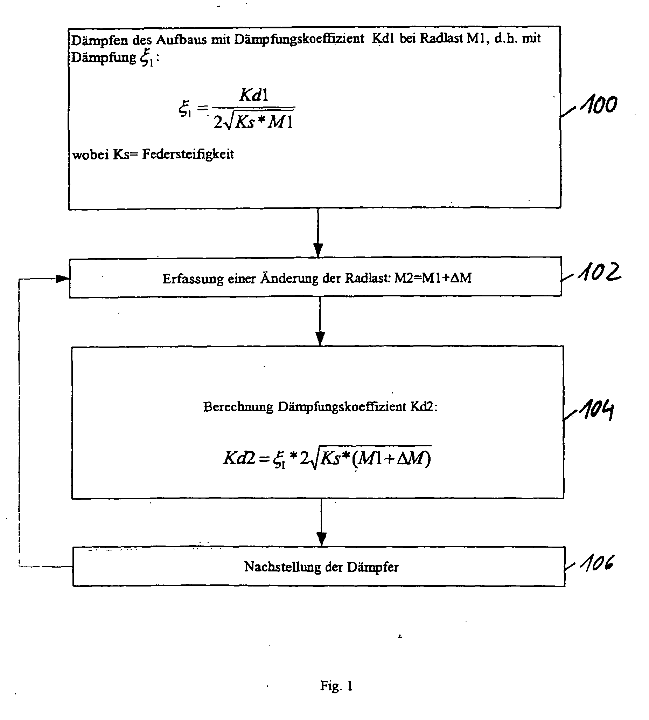

Die Figur 1 zeigt ein Verfahren zur Regelung einer Dämpfung für einen Aufbau eines Fahrzeugs. In dem Schritt 100 fährt das Fahrzeug beispielsweise mit gleichbleibender Geschwindigkeit in Geradeausrichtung in einer Ebene. Bei diesem Fahrzustand wird ein Dämpfungskoeffizient $Kd1$ bei einer Radlast $M1$ an den Dämpfern des Fahrzeugs eingestellt. Mit der Federsteifigkeit $Ks$ ergibt sich daraus die Dämpfung $\xi_1$

$$\xi_1 = \frac{Kd1}{2\sqrt{Ks*M1}}$$

In dem Schritt 102 wird eine Veränderung $\Delta M$ der Radlast erfasst. Eine solche Veränderung der Radlast kann durch eine auftretende Längs- und / oder Querbeschleunigung und/ oder durch ein Gefälle oder eine Steigung der Fahrbahn hervorgerufen werden. Ferner kann sich auch eine Veränderung der Radlasten durch eine Zuladung ergeben. Die Erfassung der Änderung der Radlasten kann über eine spezielle Sensorik oder durch Berechnung anhand von Fahrparametern erfolgen, die beispielsweise auf einem Datenbus des Fahrzeugs vorhanden sind.

In dem Schritt 104 wird ein neuer Dämpfungskoeffizient $Kd2$ wie folgt berechnet.

$$Kd2 = \xi_1 * 2\sqrt{Ks*(M1+\Delta M)}$$

Aufgrund dieser Wahl des Dämpfungskoeffizienten $Kd2$ ist die resultierende Dämpfung $\xi_2$ im wesentlichen gleich der Ausgangsdämpfung $\xi_1$.

In dem Schritt 106 werden die Dämpfer des Fahrzeugs entsprechend nachgestellt. Dies hat zur Folge, dass die Dämpfung auch bei der veränderten Fahrsituation, das heißt nach Veränderung der Radlasten, im wesentlichen konstant bleibt, so dass sich auch der Komfort trotz der Veränderung des Fahrzustandes nicht verändert. Diese Ausdehnung des Komfortbereichs wird von den Fahrzeuginsassen als angenehm empfunden.

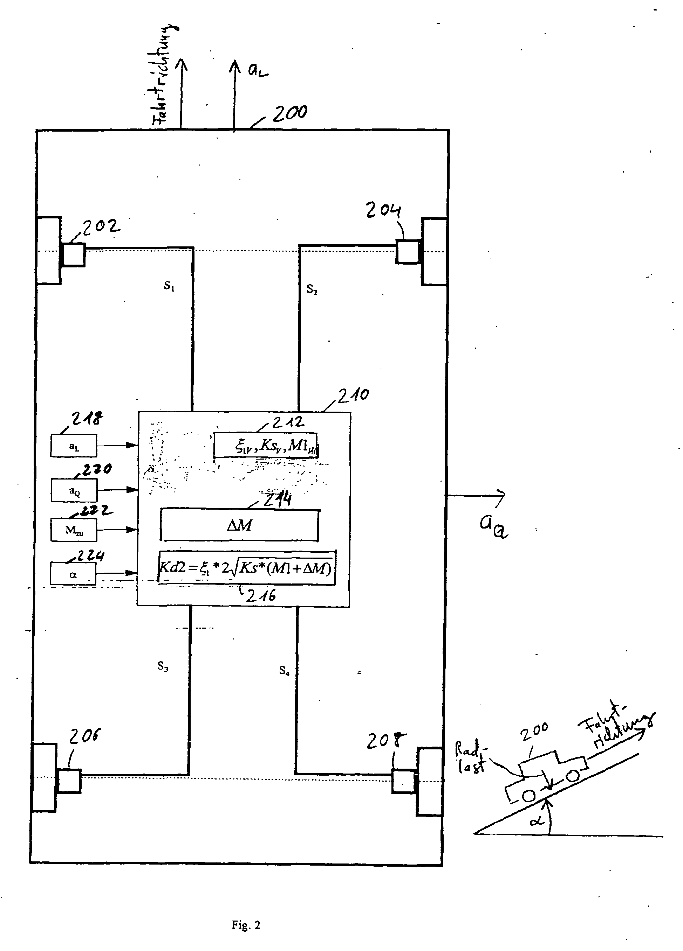

Die Erfassung von Änderungen der Radlasten, die Berechnung von Dämpfungskoeffizienten und die Nachstellung der Dämpfer in den Schritten 102, 104 und 106 wird vorzugsweise fortlaufend durchgeführt, so dass der Fahrkomfort bei unterschiedlichen Radlasten im wesentlichen konstant bleibt. Dabei werden die Schritte 102, 104 und 106 vorzugsweise für jedes Rad bzw. jeden Dämpfer des Fahrzeugs separat durchgeführt. Dies wird mit Bezugnahme auf die Figur 2 noch näher erläutert:

Die Figur 2 zeigt ein Kraftfahrzeug 200 mit Dämpfern 202, 204 für die Vorderräder und Dämpfern 206 und 208 für die Hinterräder. Bei den Dämpfern 202, 204, 206 und 208 handelt es sich um Dämpfer, deren Federkraft über die Dämpfungskoeffizienten einstellbar ist. Die Dämpfer 202, 204, 206 und 208 sind mit einem Regelungssystem 210 verbunden.

Das Regelungssystem 210 hat einen Speicher 212 zur Speicherung des Dämpfungskoeffizienten $\xi_{1V}$ des vorderen Dämpfers 202 für den Ausgangszustand (vgl. Schritt 100 der Figur 1). Ferner werden in dem Speicher 212 die vorderen Federsteifigkeiten $Ks_V$ und die vorderen Radlasten $M1_V$ des vorderen linken Rads ohne Zuladung gespeichert. Ferner werden in dem Speicher 212 auch die entsprechenden Größen für die Hinterachse bzw. die anderen Räder des Fahrzeugs gespeichert, d.h. der Dämpfungskoeffizient für die hinteren Dämpfer sowie die Federsteifigkeiten und Radlasten der anderen Räder des Fahrzeugs.

In der in Figur 2 gezeigten Ausführungsform hat das Regelungssystem 210 ferner ein Berechnungsmodul 214 zur Berechnung der Veränderung der Radlasten an den Rädern des Kraftfahrzeugs 200. Ferner hat das Regelungssystem 210 ein Berechnungsmodul 216 zur Berechnung der Dämpfungskoeffizienten nach einer Veränderung der Radlast um $\Delta M$.

Die Berechnung der Veränderung der Radlasten in dem Berechnungsmodul 214 erfolgt beispielsweise basierend auf der Erfassung von Längs- und / oder Querbeschleunigungen des Kraftfahrzeugs 200. Optional kann auch eine Zuladung $M_{zu}$ und / oder eine Steigung oder ein Gefälle mit dem Winkel $\alpha$ bei der Berechnung der Veränderung der Radlasten an den Rädern des Kraftfahrzeugs 200 mit berücksichtigt werden.

Beispielsweise kann die Berechnung der Veränderung der Radlasten in dem Berechnungsmodul 214 wie folgt erfolgen:

$$\Delta M_{VL} = -K_1 \times a_L - K_2 \times a_Q + K_3 \times M_{zu} - K_4 \times \alpha$$

$$\Delta M_{VR} = -K_5 \times a_L + K_6 \times a_Q + K_7 \times M_{zu} - K_8 \times \alpha$$

$$\Delta M_{HL} = K_9 \times a_L - K_{10} \times a_Q + K_{11} \times M_{zu} + K_{12} \times \alpha$$

$$\Delta M_{HR} = K_{13} \times a_L + K_{14} \times a_Q + K_{15} \times M_{zu} + K_{16} \times \alpha$$

wobei

$\Delta M_{VL}$ = Veränderung der Radlast am Rad vorne links
$\Delta M_{VR}$ = Veränderung der Radlast am Rad vorne rechts
$\Delta M_{HL}$ = Veränderung der Radlast am Rad hinten links
$\Delta M_{HR}$ = Veränderung der Radlast am Rad hinten rechts
$a_L$ = Längsbeschleunigung
$a_Q$ = Querbeschleunigung.

Bei $K_1$ bis $K_{16}$ handelt es sich um Konstanten, die größer sind als 0. Im Allgemeinen ist dabei $K_1 = K_5$ und $K_9$ = $K_{13}$. Wenn man eine mehr oder weniger gleichmäßige Zuladung in den Kofferraum des Kraftfahrzeugs unterstellt, kann man ferner annehmen, dass $K_3 = K_7$ und $K_{11}$, = $K_{15}$ ist. Ferner kann man annehmen, dass sich durch die Bauart des Fahrzeugs eine Aufteilung der Gesamtzuladung etwa im Verhältnis ¼ vorne und ¾ hinten bei einer Zuladung in einen im Heck befindlichen Kofferraum ergibt. Dies bedeutet, dass

$K_3$, $K_7$
= ⅛ und $K_{11} = K_{15}$ = ⅜ sind.

Die Größen $a_L$, $a_Q$, $M_{zu}$ und $\alpha$ werden von den entsprechenden Sensoren 218, 220, 222 und 224 an das Regelungssystem 210 geliefert.

In dem Berechnungsmodul 216 wird dann für jeden der Dämpfer 202 bis 208 basierend auf der jeweiligen Veränderung der Radlast ein neuer Dämpfungskoeffizient $Kd2$ berechnet. Beispielsweise wird also der neue Dämpfungskoeffizient $Kd2$ für den Dämpfer 202 aus der Dämpfung $\xi_{1V}$, der Federsteifigkeit $Ks_V$ und der Radlast $M1_V$ aus dem Speicher 212 sowie der Radlastveränderung $\Delta M_{VL}$, die von dem Berechnungsmodul 214 ermittelt worden ist, berechnet. Entsprechend wird für sämtliche Dämpfer vorgegangen.

Alternativ zu der Ausführungsform der Figur 2 kann das Regelungssystem 210 auch mit einem Datenbus des Kraftfahrzeugs 200 verknüpft werden. Wenn das Kraftfahrzeug 200 beispielsweise eine fahrdynamische Regelung wie ESP aufweist, sind auf dem Datenbus zumindest die Werte für die Längsbeschleunigung $a_L$ und die Querbeschleunigung $a_Q$ vorhanden; auf diese Werte kann das Regelungssystem 210 über den Datenbus zugreifen, um die Radlaständerungen $\Delta M$ in dem Berechnungsmodul 214 zu berechnen.

Das Regelungssystem 210 kann ferner einen Komparator aufweisen, um die Radlaständerungen $\Delta M$ mit einem Schwellwert zu vergleichen. Bei einer Überschreitung des Schwellwerts schaltet das Regelungssystem 210 auf ein alternatives Regelungsverfahren, wie beispielsweise das Ground Hook Verfahren um, um die Haftung zwischen Fahrbahn und Reifen zu verbessern. Wenn der Schwellwert wieder unterschritten wird, werden die Dämpfungskoeffizienten wieder über das Berechnungsmodul 216 vorgegeben.

Zur Einstellung der Dämpfer 202 bis 208 entsprechend der von dem Berechnungsmodul 216 berechneten Dämpfungskoeffizienten $Kd2$ gibt das Regelungssystem 210 Signale $S_1$, $S_2$, $S_3$, $S_4$ an die Dämpfer 202, 204, 206 bzw. 208 ab. Bei diesen Signalen $S_1$ bis $S_4$ handelt es sich um Stellsignale, um die berechneten Dämpfungskoeffizienten individuell an den Dämpfern 204 bis 208 einzustellen.

**Bezugszeichenliste**

(Teil der Beschreibung)

| 200 | Kraftfahrzeug |
| 202 | Dämpfer |
| 204 | Dämpfer |
| 206 | Dämpfer |
| 208 | Dämpfer |
| 210 | Regelungssystem |

212     Speicher
214     Berechnungsmodul
216     Berechnungsmodul
218     Sensor
220     Sensor
222     Sensor
224     Sensor

**Patentansprüche**

1.  Verfahren zur Verstellung eines Dämpfungskoeffizienten eines Federbeins eines Fahrzeugs, **gekennzeichnet durch** die folgenden Schritte:

    - Dämpfen des Federbeins mit einem ersten Dämpfungskoeffizienten bei einer ersten Radlast,
    - Erfassung einer Veränderung der Radlast,
    - Ermittlung eines zweiten Dämpfungskoeffizienten basierend auf der Veränderung der Radlast, so dass die Dämpfung nach der Veränderung der Radlast im wesentlichen unverändert bleibt,
    Dämpfen des Federbeins mit dem zweiten Dämpfungskoeffizienten.

2.  Verfahren nach Anspruch 1, mit folgenden weiteren Schritten:

    - Messung einer Beschleunigung des Fahrzeugs,
    - Ermittlung der Veränderung der Radlast aus der Beschleunigung.

3.  Verfahren nach Anspruch 2, wobei eine Längs- und / oder Querbeschleunigung des Fahrzeugs gemessen wird.

4.  Verfahren nach Anspruch 1, 2 oder 3, wobei eine Zuladung in die Erfassung der Veränderung der Radlast eingeht.

5.  Verfahren nach einem der vorhergehenden Ansprüche 1 bis 4, wobei ein Hangneigungswinkel in die Erfassung der Veränderung der Radlast eingeht.

6.  Verfahren nach einem der vorhergehenden Ansprüche 1 bis 5, wobei die Erfassung der Veränderung der Radlast durch Messung einer Radaufstandskraft erfolgt.

7.  Verfahren nach Anspruch 6., wobei die Messung der Radaufstandskraft durch Messung eines Lüftfederdrucks eines Dämpfers und eines Höhenabstands zwischen einer Fahrzeugachse und dem Aufbau erfolgt.

8.  Verfahren nach einem der vorhergehenden Ansprüche 1 bis 7, wobei für die Erfassung einer Veränderung der Radlast erforderliche Größen über ein Bussystem zur Verfügung gestellt werden.

9.  Verfahren nach einem der vorhergehenden Ansprüche 1 bis 8, wobei der zweite Dämpfungskoeffizient gegenüber dem ersten Dämpfungskoeffizient bei einer Erhöhung der Radlast im wesentlichen proportional zu der Wurzel aus der Erhöhung der Radlast vergrößert wird.

10. Verfahren nach einem der vorhergehenden Ansprüche 1 bis 9, wobei der zweite Dämpfungskoeffizient gegenüber dem ersten Dämpfungskoeffizient bei einer Erhöhung der Radlast im wesentlichen proportional zu der Erhöhung der Radlast vergrößert wird.

11. Verfahren nach einem der vorhergehenden Ansprüche 1 bis 10, wobei der zweite Dämpfungskoeffizient Kd2 wie folgt berechnet wird:

$$Kd2 = \xi_1 * 2\sqrt{Ks * (M1 + \Delta M)}$$

wobei

$\xi_1$ = Dämpfung des Federbeins
$Ks$ = Federsteifigkeit des Federbeins
$M1$ = erste Radlast
$\Delta M$ = Veränderung der Radlast

12. Verfahren nach einem der vorhergehenden Ansprüche 1 bis 11, wobei die Regelung der Dämpfung für jeden der Dämpfer des Fahrzeugs separat durchgeführt wird.

13. Verfahren nach einem der vorhergehenden Ansprüche 1 bis 12, wobei die erfasste Veränderung der Radlast mit einem Schwellwert verglichen wird, und bei einer Überschreitung des Schwellwert, die Dämpfung zur Verbesserung des Fahrbahn-Reifenkontakts verändert wird.

14. Verfahren nach Anspruch 13, wobei bei einer Überschreitung des Schwellwerts auf ein Ground Hook Verfahren umgestellt wird.

15. Verfahren nach einem der vorhergehenden Ansprüche 1 bis 14, wobei eine Veränderung des zweiten Dämpfungskoeffizienten gegenüber dem ersten Dämpfungskoeffizienten durch einen Maximalwert begrenzt wird, wobei der Maximalwert von einer Fahrzeugsgeschwindigkeit abhängig ist.

16. Verfahren nach Anspruch 15, wobei der Maximalwert mit zunehmender Fahrzeuggeschwindigkeit vergrößert wird.

17. Digitales Speichermedium mit Programmmitteln zur Regelung einer Dämpfung für einen Aufbau eines Fahrzeugs, **dadurch gekennzeichnet, daß** die Programmmittel zur Berechnung einer Veränderung eines Dämpfungskoeffizienten aus einer Veränderung einer Radlast ausgebildet sind, so dass die Dämpfung nach einer Veränderung der Radlast im wesentlichen konstant bleibt.

18. Regelungssystem zur Regelung einer Dämpfung für ein Federbein eines Fahrzeugs **gekennzeichnet durch:**

- Mittel (210, 216) zur Berechnung eines Dämpfungskoeffizienten (Kd2) basierend auf der Veränderung einer Radlast, so dass die Dämpfung nach der Veränderung der Radlast im wesentlichen unverändert bleibt,
- Mittel (210) zur Ausgabe einer Stellgröße für einen Dämpfer zur Einstellung des Dämpfungskoeffizienten.

19. Regelungssystem nach Anspruch 18, wobei die Mittel zur Berechnung des Dämpfungskoeffizienten zum Zugriff auf einen Datenbus ausgebildet sind, um auf Daten für die Berechnung des Dämpfungskoeffizienten zuzugreifen.

20. Regelungssystem nach Anspruch 17 oder 18, mit Mitteln (218, 220) zur Messung einer Beschleunigung des Fahrzeugs, wobei die Mittel zur Berechnung des Dämpfungskoeffizienten so ausgebildet sind, dass aus den Beschleunigungsdaten die Veränderung der Radlast ermittelt wird.

21. Regelungssystem nach einem der vorhergehenden Ansprüche 18, 19 oder 20, mit einem Ground Hook Regelungsmodul und einem Komparator zum Vergleich der Veränderung der Radlast mit einem Schwellwert und mit Mitteln zum Umschalten auf das Ground Hook Regelungsmodul, sofern der Schwellwert überschritten wird.

**Claims**

1. Method for adjusting a damping coefficient of a MacPherson strut unit of a vehicle, **characterized by** the following steps:

- damping of the MacPherson strut unit with a first damping coefficient and a first wheel load,
- sensing of a change in the wheel load,
- determination of a second damping coefficient based on the change in the wheel load so that the damping remains essentially unchanged after the change in the wheel load,
- damping of the MacPherson strut unit with the second damping coefficient.

2. Method according to Claim 1 having the following steps:

- measurement of an acceleration of the vehicle,

- determination of the change in the wheel load from the acceleration.

**3.** Method according to Claim 2, wherein a longitudinal acceleration and/or transverse acceleration of the vehicle is measured.

**4.** Method according to Claim 1, 2 or 3, wherein an additional cargo is included in the sensing of the change in the wheel load.

**5.** Method according to one of the preceding Claims 1 to 4, wherein an angle of inclination on a slope is included in the sensing of the change in the wheel load.

**6.** Method according to one of the preceding claims 1 to 5, wherein the sensing of the change in the wheel load is carried out by measuring the wheel contact force.

**7.** Method according to Claim 6, wherein the measurement of the wheel contact force is carried out by measuring an air spring pressure of a damper and a vertical distance between an axle of a vehicle and the vehicle body.

**8.** Method according to one of the preceding Claims 1 to 7, wherein variables which are necessary to sense a change in the wheel load are made available via a bus system.

**9.** Method according to one of the preceding claims 1 to 8, wherein, when there is an increase in the wheel load, the second damping coefficient is increased essentially proportionally to the root of the increase in the wheel load compared to the first damping coefficient.

**10.** Method according to one of the preceding Claims 1 to 9, wherein, when there is an increase in the wheel load, the second damping coefficient is increased essentially proportionally to the increase in the wheel load compared to the first damping coefficient.

**11.** Method according to one of the preceding Claims 1 to 10, wherein the second damping coefficient *Kd*2 is calculated as follows:

$$Kd2 = \xi_1 * 2\sqrt{Ks * (M1 + \Delta M)}$$

wherein

$\xi$ = Attenuation of the MacPherson strut unit
Ks = Spring stiffness of the MacPherson strut unit
M1 = First wheel load
$\Delta$M = change in the wheel load

**12.** Method according to one of the preceding Claims 1 to 11, wherein the control of the damping is carried out separately for each of the dampers of the vehicle.

**13.** Method according to one of the preceding Claims 1 to 12, wherein the sensed change in the wheel load is compared with a threshold value, and when the threshold value is exceeded the damping is changed in order to improve the contact between the underlying surface and the tyre.

**14.** Method according to Claim 13, wherein when the threshold value is exceeded a Ground Hook method is switched to.

**15.** Method according to one of the preceding Claims 1 to 14, wherein a change in the second damping coefficient with respect to the first damping coefficient is limited by a maximum value, wherein the maximum value is dependent on a vehicle speed.

**16.** Method according to Claim 15, wherein the maximum value is increased as the speed of the vehicle increases.

**17.** Digital storage medium with programming means for controlling damping of a body of a vehicle, **characterized in that** the programming means are designed to calculate a change in a damping coefficient from a change in a wheel load so that the damping remains essentially constant after a change in the wheel load.

**18.** Control system for controlling damping for a MacPherson strut unit of a vehicle, **characterized by**:

- means (210, 216) for calculating a damping coefficient (Kd2) based on the change in a wheel load so that the damping remains essentially unchanged after the change in the wheel load,
- means (210) for outputting a manipulated variable for a damper for setting the damping coefficient.

**19.** Control system according to Claim 18, wherein the means for calculating the damping coefficient are designed to access a data bus in order to access data for the calculation of the damping coefficient.

**20.** Control system according to Claim 17 or 18, having means (218, 220) for measuring the acceleration of the vehicle, wherein the means for calculating the damping coefficient are embodied in such a way that the change in the wheel load is determined from the acceleration data.

**21.** Control system according to one of the preceding Claims 18, 19 or 20, having a Ground Hook control module and a comparator for comparing the change in the wheel load with a threshold value, and having means for switching over to the Ground Hook control module if the threshold value is exceeded.

**Revendications**

**1.** Procédé de réglage d'un coefficient d'amortissement d'une jambe de force à ressort d'un véhicule, **caractérisé par** les étapes suivantes:

- amortissement de la jambe de force à ressort avec un premier coefficient d'amortissement pour une première charge de roue,
- détection d'une variation de la charge de roue,
- détermination d'un deuxième coefficient d'amortissement sur la base de la variation de la charge de roue, de telle manière que l'amortissement reste essentiellement inchangé après la variation de la charge de roue,
- amortissement de la jambe de force à ressort avec le deuxième coefficient d'amortissement.

**2.** Procédé selon la revendication 1, comportant les étapes supplémentaires suivantes:

- mesure de l'accélération du véhicule,
- détermination de la variation de la charge de roue à partir de l'accélération.

**3.** Procédé selon la revendication 2, dans lequel on mesure une accélération longitudinale et/ou transversale du véhicule.

**4.** Procédé selon la revendication 1, 2 ou 3, dans lequel une charge utile intervient dans la variation de la charge de roue.

**5.** Procédé selon l'une quelconque des revendications précédentes 1 à 4, dans lequel un angle d'inclinaison intervient dans la détection de la variation de la charge de roue.

**6.** Procédé selon l'une quelconque des revendications précédentes 1 à 5, dans lequel on effectue la détection de la variation de la charge de roue par la mesure d'une force de contact de la roue.

**7.** Procédé selon la revendication 6, dans lequel on effectue la mesure de la force de contact de la roue par la mesure d'une pression d'amortisseur pneumatique d'un amortisseur et d'une distance en hauteur entre un essieu du véhicule et la superstructure.

**8.** Procédé selon l'une quelconque des revendications précédentes 1 à 7, dans lequel les grandeurs nécessaires pour la détection d'une variation de la charge de roue sont fournies par un système de bus.

**9.** Procédé selon l'une quelconque des revendications précédentes 1 à 8, dans lequel le deuxième coefficient d'amortissement est augmenté par rapport au premier coefficient d'amortissement, lors d'une augmentation de la charge de roue, de manière essentiellement proportionnelle à la racine carrée de l'augmentation de la charge de roue.

**10.** Procédé selon l'une quelconque des revendications précédentes 1 à 9, dans lequel le deuxième coefficient d'amortissement est augmenté par rapport au premier coefficient d'amortissement, lors d'une augmentation de la charge de roue, d'une manière essentiellement proportionnelle à l'augmentation de la charge de roue.

**11.** Procédé selon l'une quelconque des revendications précédentes 1 à 10, dans lequel le deuxième coefficient d'amortissement Kd2 est calculé comme suit:

$$Kd2 \;=\; \xi_1 * 2\sqrt{Ks*\left(M1+\Delta M\right)}$$

où

$\xi_1$ = amortissement de la jambe de force à ressort
Ks = raideur de la jambe de force à ressort
M1 = première charge de roue
$\Delta$M = variation de la charge de roue.

**12.** Procédé selon l'une quelconque des revendications précédentes 1 à 11, dans lequel on effectue séparément la régulation de l'amortissement pour chacun des amortisseurs du véhicule.

**13.** Procédé selon l'une quelconque des revendications précédentes 1 à 12, dans lequel on compare la variation détectée de la charge de roue à une valeur de seuil, et on fait varier l'amortissement pour améliorer le contact du pneu avec la chaussée lorsque la valeur de seuil est dépassée.

**14.** Procédé selon la revendication 13, dans lequel on passe à un procédé Ground Hook lorsque la valeur de seuil est dépassée.

**15.** Procédé selon l'une quelconque des revendications précédentes 1 à 14, dans lequel on limite une variation du deuxième coefficient d'amortissement par rapport au premier coefficient d'amortissement par une valeur maximale, dans lequel la valeur maximale dépend d'une vitesse du véhicule.

**16.** Procédé selon la revendication 15, dans lequel on augmente la valeur maximale lorsque la vitesse du véhicule augmente.

**17.** Support de mémoire numérique avec des moyens de programme pour la régulation de l'amortissement pour une superstructure d'un véhicule, **caractérisé en ce que** les moyens de programme sont conçus pour le calcul d'une variation d'un coefficient d'amortissement à partir d'une variation d'une charge de roue, de telle manière que l'amortissement reste essentiellement constant après une variation de la charge de roue.

**18.** Système de régulation pour la régulation d'un amortissement pour une jambe de force à ressort d'un véhicule, **caractérisé par**:

- des moyens (210, 216) pour calculer un coefficient d'amortissement (Kd2) sur la base de la variation d'une charge de roue, de telle manière que l'amortissement reste essentiellement inchangé après la variation de la charge de roue,
- des moyens (210) pour produire une grandeur de réglage pour un amortisseur en vue du réglage du coefficient d'amortissement.

**19.** Système de régulation selon la revendication 18, dans lequel les moyens de calcul du coefficient d'amortissement sont conçus pour accéder à un bus de données, afin d'avoir accès à des données pour le calcul du coefficient d'amortissement.

**20.** Système de régulation selon la revendication 17 ou 18, avec des moyens (218, 220) pour mesurer une accélération du véhicule, dans lequel les moyens de calcul du coefficient d'amortissement sont conçus de façon à déterminer la variation de la charge de roue à partir des données d'accélération.

21. Système de régulation selon l'une quelconque des revendications précédentes 18, 19 ou 20, avec un module de régulation Ground Hook et un comparateur pour comparer la variation de la charge de roue à une valeur de seuil, et avec des moyens pour passer au module de régulation Ground Hook, dans la mesure où la valeur de seuil est dépassée.

Dämpfen des Aufbaus mit Dämpfungskoeffizient Kd1 bei Radlast M1, d.h. mit Dämpfung $\xi_1$:

$$\xi_1 = \frac{Kd1}{2\sqrt{Ks * M1}}$$

wobei Ks= Federsteifigkeit

**/100**

Erfassung einer Änderung der Radlast: M2=M1+ΔM    **/102**

Berechnung Dämpfungskoeffizient Kd2:

$$Kd2 = \xi_1 * 2\sqrt{Ks * (M1 + \Delta M)}$$

**/104**

Nachstellung der Dämpfer    **/106**

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4244871 A
- DE 10017506 C2